# EUROPEAN PATENT APPLICATION

(11) **EP 2 623 370 A2**
(43) Date of publication of application: **07.08.2013**
(21) Application number: 13151275.8
(22) Date of filing: 15.01.2013
(51) Int. Cl.: B60Q 1/068, F21S 8/10

(54) **Vehicle headlamp**

(30) Priority: 01.02.2012 JP 2012020091
(71) Applicant: Koito Manufacturing Co., Ltd., Tokyo 108-8711 (JP)
(72) Inventor: Imamura, Kenji, Shizuoka-shi, Shizuoka (JP); Katsumata, Yasuhiro, Shizuoka-shi, Shizuoka (JP)
(74) Representative: Finnie, Peter John

(57) **Abstract**

A vehicle lamp (10) is provided with a light source (18) and an optical member (20) that irradiates light from the light source (18) forward of the lamp (10). The optical member (20) is provided to be tiltable with respect to the light source (18) by a tilting mechanism (100).

## Description

### BACKGROUND OF THE INVENTION

### <FIELD OF THE INVENTION>

The present invention relates to a vehicle lamp.

### <RELATED ART>

Conventionally, there is a direct projection type vehicle lamp in which light from a light source such as an LED is directly projected through a projection lens. For example, JP-A-2011-108570 discloses a direct projection type fog lamp.

In a shipping or a safety inspection, an adjustment an optical axis of the vehicle lamp (also referred to as 'aiming adjustment') is performed so that the optical axis of the vehicle lamp is adjusted in a direction that is determined in a design. The aiming adjustment is carried out by vertically or laterally tilting an entire of the vehicle lamp. However, if a mechanism for tilting the entire vehicle lamp is provided, a size of the vehicle lamp may increase.

### SUMMARY OF THE INVENTION

One or more embodiments of the invention provide a small sized vehicle lamp.

### BRIEF DESCRIPTION OF THE DRAWINGS

FIG. 1 is a perspective view of a vehicle lamp according to a first exemplary embodiment.
FIG. 2 is a horizontal cross-sectional view of the vehicle lamp according to the first exemplary embodiment.
FIG. 3 is a vertical cross-sectional view of the vehicle lamp according to the first exemplary embodiment.
FIG. 4 is a view showing a condition in which a projection lens tilts with respect to an LED.
FIG. 5 is a horizontal cross-sectional view of a vehicle lamp according to a second exemplary embodiment.
FIG. 6 is a cross-sectional view taken along a line 6-6 in FIG. 5.
FIG. 7 is a cross-sectional view taken along a line 7-7 in FIG. 5.
FIG. 8 is a horizontal cross-sectional view of a vehicle lamp according to a third exemplary embodiment.
FIG. 9 is a cross-sectional view taken along a line 9-9 in FIG. 8.
FIG. 10 is a cross-sectional view taken along a line 10-10 in FIG. 8.

### DETAILED DESCRIPTION OF THE EMBODIMENTS

Exemplary embodiments are described in detail with reference to the drawings.

### <First Exemplary Embodiment>

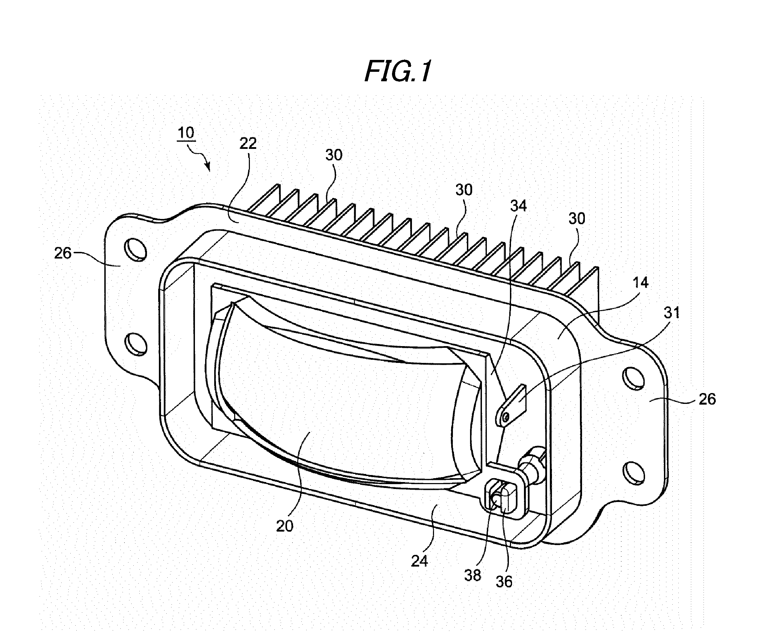

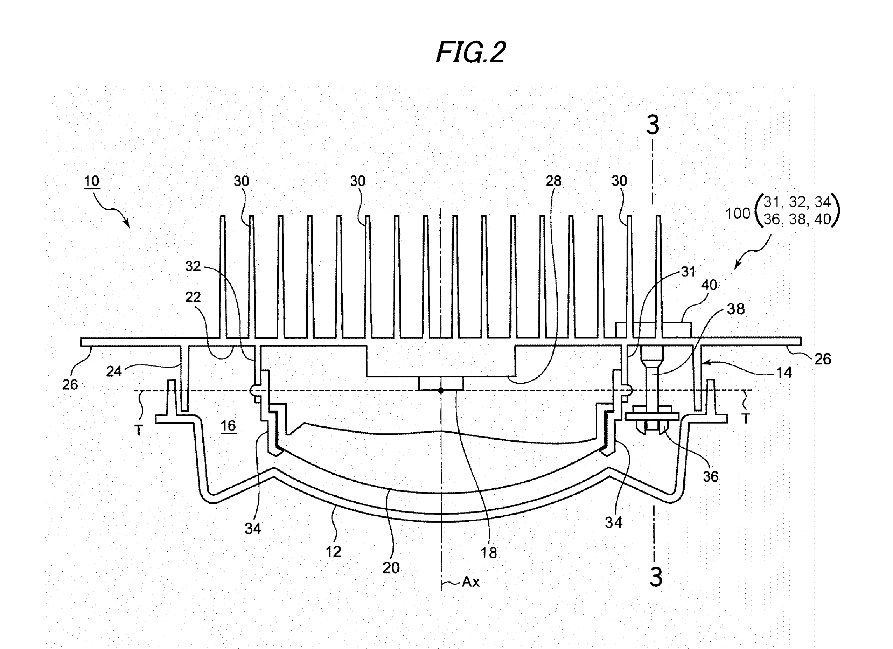

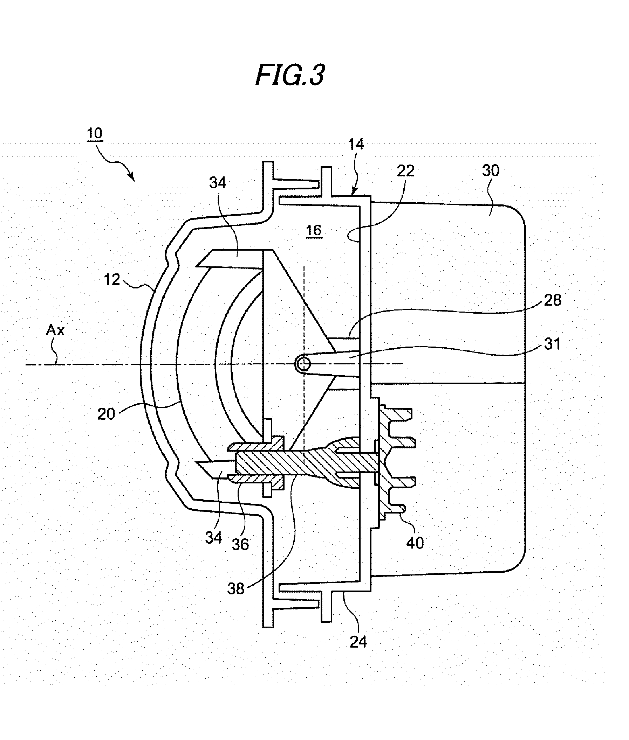

FIG. 1 is a perspective view of a vehicle lamp 10 according to a first exemplary embodiment. FIG. 2 is a horizontal cross-sectional view of the vehicle lamp 10. FIG. 3 is a vertical cross-sectional view of the vehicle lamp 10 (taken along line 3-3 of the vehicle lamp 10 shown in FIG. 2). In the following description, terms 'upside (upward),' 'downside (downward),' 'front (forward),' 'rear (backward),' 'left' and 'right' respectively correspond to 'upside (upward),' 'downside (downward),' 'front (forward),' 'rear (backward),' 'left' and 'right' of a vehicle in which the vehicle lamp 10 is mounted.

According to an embodiment, the vehicle lamp 10 is a direct projection type vehicle lamp which may be used as a fog lamp disposed in the front section of a vehicle. The vehicle lamp 10 includes a lamp body 14 with an opening thereof being directed forward of the lamp 10 and a transparent cover 12 which covers the opening of the lamp body 14. The lamp body 14 and the cover 12 form a lamp chamber 16, which houses therein an LED 18 acting as a light source and a projection lens 20 which projects light from the LED 18 in a direction forward of the vehicle. Further, FIG. 1 shows the vehicle lamp 10 in a state where the cover 12 is removed.

The lamp body 14 includes a base section 22 which has a shape of a substantially rectangular plate and a frame 24 which is provided on a front surface of the base section 22 to form the lamp chamber 16. An attachment sections 26 with which the vehicle lamp 10 is attached to a vehicle body is provided on each of left and right ends of the base section 22. In addition, an LED mount 28 on which an LED 18 is mounted is provided in a substantially central portion of the front surface of the base section 22. On a rear surface of the base section 22, a plurality of heat-radiating fins 30 is erected so as to configure a heat sink for radiating heat generated from the LED 18. Since the base of the heat sink and the base section 22 of the lamp are designed as a common component, a size of the lamp can be reduced. In addition, lens support sections 31 and 32 which support the projection lens 20 are provided on the left and right side of the LED mount 28 on the front surface of the base section 22.

The LED 18 is disposed on the LED mount 28 such that a light-emitting surface thereof faces forward of the lamp. The LED 18 has a rectangular shape, and is disposed such that a longer side is parallel to a horizontal direction (vehicle width direction).

The projection lens 20 is disposed in front of the LED 18. The projection lens 20 is disposed such that a rear focus thereof is positioned at substantially a center of the light-emitting surface of the LED 18. In addition, the projection lens 20 is disposed such that an optical axis Ax thereof passes through substantially the center of the light-emitting surface of the LED 18. The projection lens 20 projects an inversion image of a shape of the light-emitting surface of the LED 18 forward of the lamp.

According to an embodiment, the projection lens 20 is supported such that it can vertically tilt around a tilting axis T which extends in the horizontal direction (vehicle width direction). The projection lens 20 is held by a frame type lens holder 34, which is pivotably supported by the lens supports 31 and 32 disposed on the base section 22. The tilting axis T is parallel to the light-emitting surface of the LED 18, and passes through substantially the center of the light-emitting surface of the LED 18. In other words, the LED 18 is disposed on or adjacent to the tilting axis T. A self-locking nut 36 is fixed to the left lower end of the lens holder 34, and an aiming bolt 38 is screwed into the self-locking nut 36. One end of the aiming bolt 38 extends through the base section 22 and reaches the rear side of the base section 22, and an aiming knob 40 is attached to the aiming bolt 38. According to an embodiment, the lens holder 34, the lens support sections 31 and 32, the self-locking nut 36, the aiming bolt 38 and the aiming knob 40 may constitute a tilting mechanism 100 which enables the projection lens 20 to tilt with respect to the LED 18.

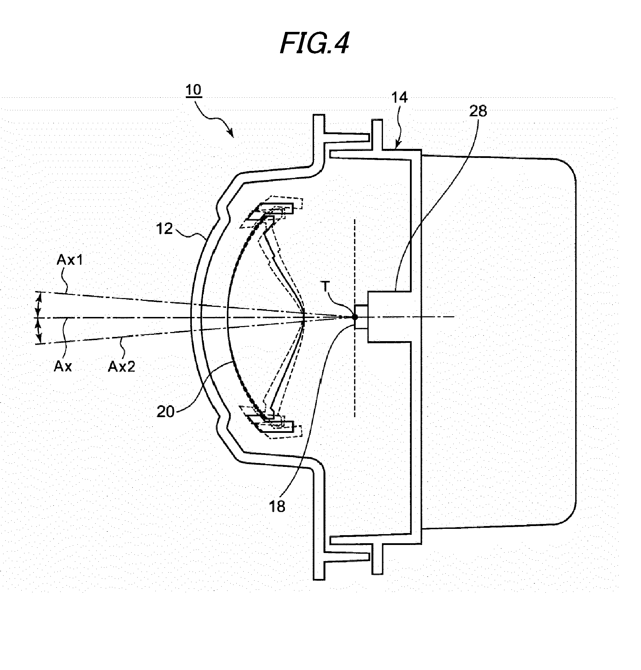

FIG. 4 is a view showing a condition in which the projection lens 20 tilts with respect to the LED 18. In the vehicle lamp 10, when the aiming knob 40 is turned in one direction, the self-locking nut 36 which is screwed with the aiming bolt 38 advances forward following the rotation of the aiming bolt 38. Since the self-locking nut 36 is fixed to the lens holder 34 which holds the projection lens 20, the projection lens 20 tilts around the tilting axis T and upward with respect to the LED 18. Following the upward tilting of the projection lens 20, the optical axis Ax moves upward (shown as an 'optical axis Ax1' in FIG. 4). Meanwhile, when the aiming knob 40 is turned in the other direction, the self-locking nut 36 retreats backward following the rotation of the aiming bolt 38, and the projection lens 20 tilts around the tilting axis T and downward with respect to the LED 18. Following the downward tilting of the projection lens 20, the optical axis Ax moves downward (shown as an 'optical axis Ax2' in FIG. 4).

In the vehicle lamp 10, the direction of the optical axis Ax of the vehicle lamp 10 is adjusted by tilting the projection lens 20 with respect to the LED 18 using the tilting mechanism 100. By structuring the projection lens 20 so as to tilt, it is possible to make the tilting mechanism 100 more compact than the case in which the entire lighting unit is tilted, thereby reducing the size and weight of the vehicle lamp 10.

In addition, according to an embodiment in which the tilting mechanism 100 is mounted on the heat sink which radiates heat generated from the LED 18, it is possible to reduce the number of parts, thereby miniaturizing the lamp.

### <Second Embodiment>

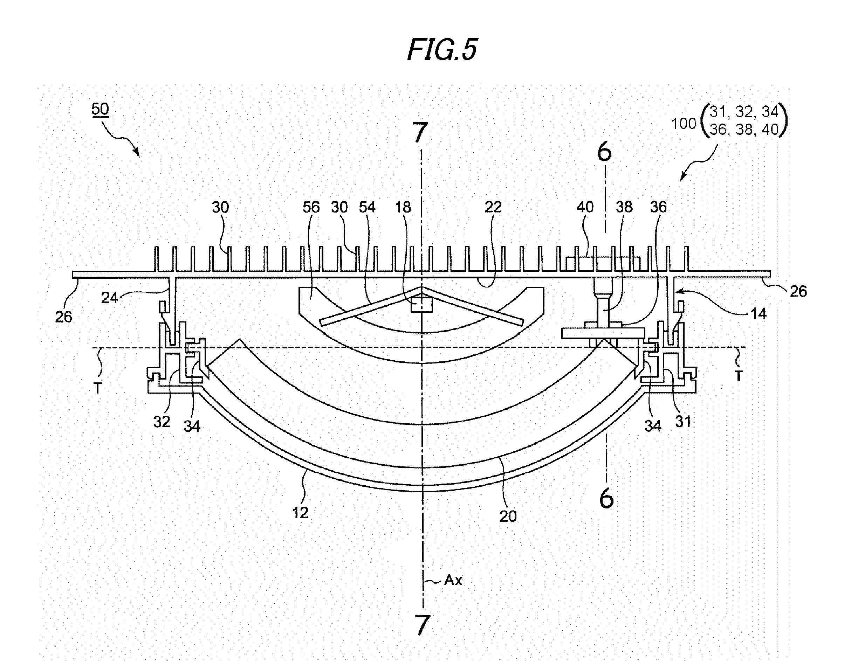

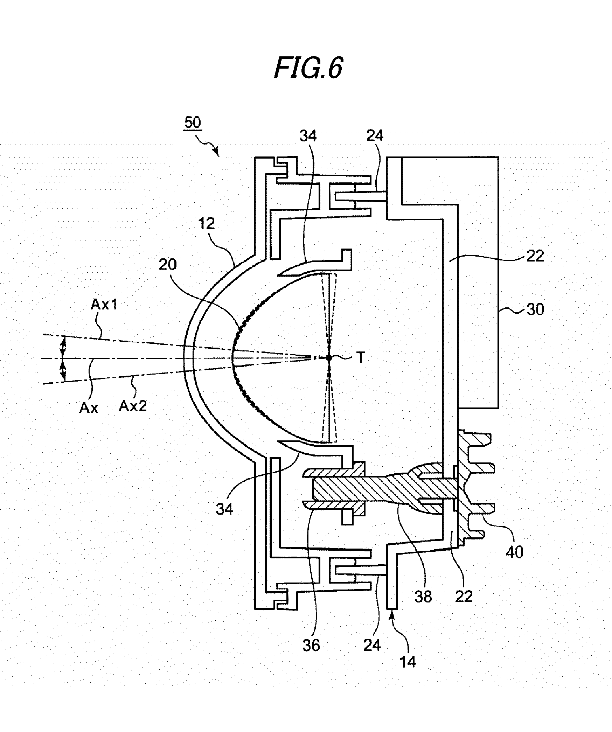

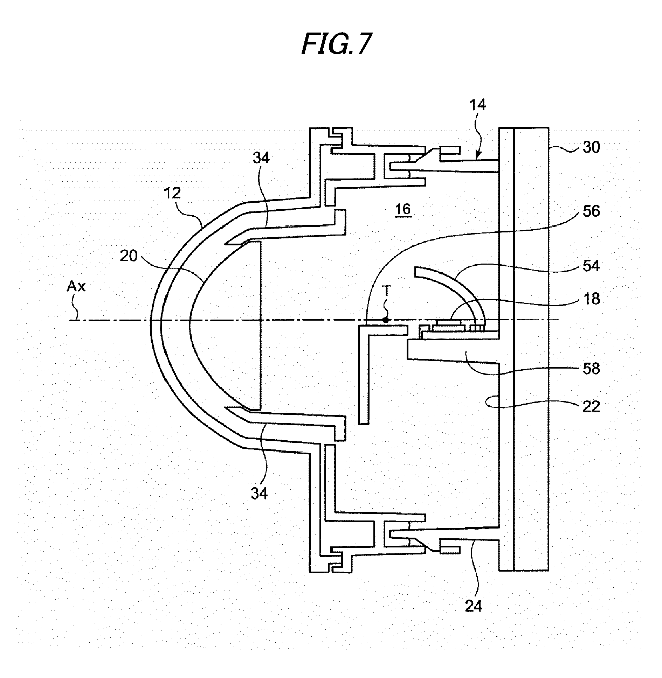

FIG. 5 is a horizontal cross-sectional view of a vehicle lamp 50 according to a second exemplary embodiment. FIG. 6 is a cross-sectional view taken along line 6-6 in FIG. 5. FIG. 7 is a cross-sectional view taken along line 7-7 in FIG. 5. As for the vehicle lamp 50 shown in FIG. 5 to FIG. 7, the same reference numerals are used to designate the same or corresponding components of the vehicle lamp 10 shown in FIG. 1 to FIG. 4, and repetitive descriptions thereof will be omitted.

The vehicle lamp 50 shown in FIG. 5 to FIG. 7 may also be used as a fog lamp. According to the vehicle lamp 50, a projector type lighting unit is mounted inside the lamp chamber 16 defined by the lamp body 14 and the cover 12. The lighting unit includes the LED 18, the reflector 54, the shade 56 and the projection lens 20.

According to an embodiment, the LED 18 is disposed on an LED mount 58 which extends from the base section 22 of the lamp body 14 forward of the lamp such that the lighting surface of the LED 18 faces upward. The reflector 54 reflects light from the LED 18 forward of the lamp. The shade 56 blocks part of light that has been reflected from the reflector 54. The projection lens 20 projects light that has passed by the shade 56 forward of the lamp.

The projection lens 20 is supported such that it can vertically tilt around the tilting axis T which extends in the horizontal direction (vehicle width direction). The projection lens 20 is held by the frame type lens holder 34, which is pivotably supported by the lens support sections 31 and 32. According to an embodiment, the lens support sections 31 and 32 are attached to the frame 24.

According to an embodiment, the self-locking nut 36 is fixed to the left lower end of the lens holder 34, and the aiming bolt 38 is screwed into the self-locking nut 36. One end of the aiming bolt 38 extends through the base section 22 and reaches the rear side of the base section 22, and the aiming knob 40 is attached to the aiming bolt 38. According to an embodiment, the lens holder 34, the lens support sections 31 and 32, the self-locking nut 36, the aiming bolt 38 and the aiming knob 40 may configure a tilting mechanism 100 which enables the projection lens 20 to tilt with respect to the LED 18.

FIG. 6 shows a condition in which the projection lens 20 tilts with respect to the LED 18. In the vehicle lamp 50, when the aiming knob 40 is turned in one direction, the self-locking nut 36 which is screwed with the aiming bolt 38 advances forward following the rotation of the aiming bolt 38. Since the self-locking nut 36 is fixed to the lens holder 34 which holds the projection lens 20, the projection lens 20 tilts around the tilting axis T and upward with respect to the LED 18. Following the upward tilting of the projection lens 20, the optical axis Ax moves upward (shown as an 'optical axis Ax1' in FIG. 6). Meanwhile, when the aiming knob 40 is turned in the other direction, the self-locking nut 36 retreats backward following the rotation of the aiming bolt 38, and the projection lens 20 tilts around the tilting axis T and downward with respect to the LED 18. Following the downward tilting of the projection lens 20, the optical axis Ax moves downward (shown as an 'optical axis Ax2' in FIG. 6).

The vehicle lamp 50 of the second exemplary embodiment is also configured such that the direction of the optical axis Ax of the vehicle lamp 50 is adjusted by tilting the projection lens 20 with respect to the LED 18 using the tilting mechanism 100. By structuring the projection lens 20 so as to tilt as in the second exemplary embodiment, it is possible to make the tilting mechanism 100 more compact than the case in which the entire projector-type lighting unit is tilted, thereby reducing the size and weight of the vehicle lamp 50.

### <Third Exemplary Embodiment>

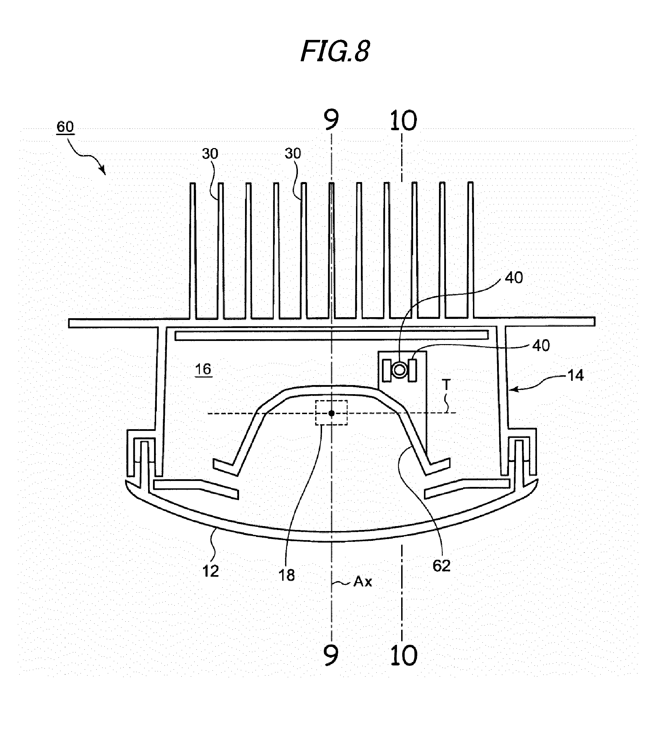

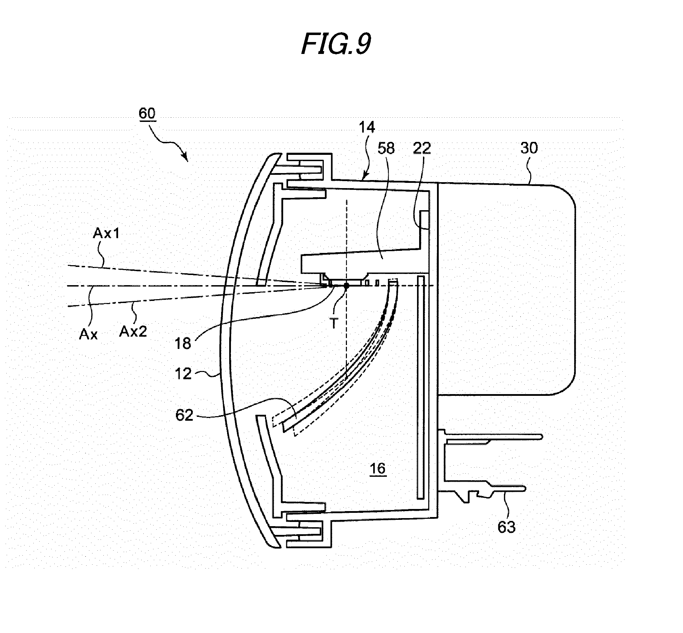

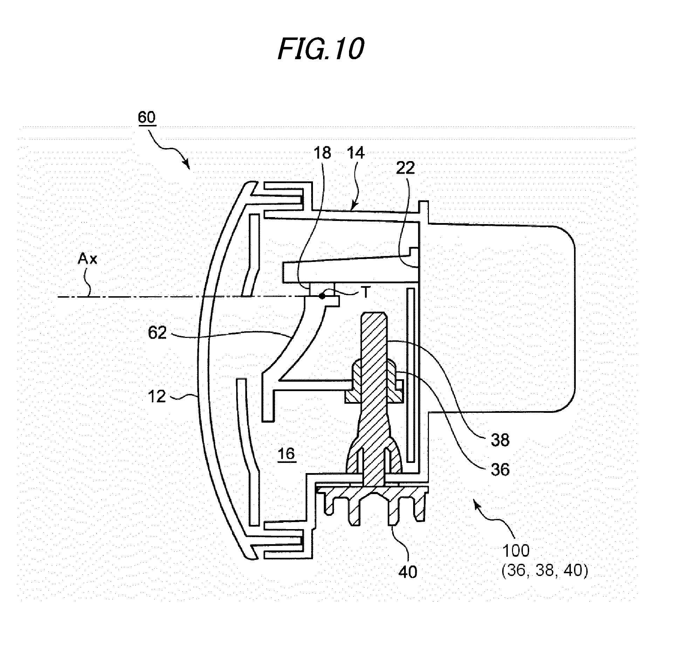

FIG. 8 is a horizontal cross-sectional view of a vehicle lamp 60 according to a third exemplary embodiment. FIG. 9 is a cross-sectional view taken along line 9-9 in FIG. 8. FIG. 10 is a cross-sectional view taken along line 10-10 in FIG. 8. As for the vehicle lamp 60 shown in FIG. 8 to FIG. 10, the same reference numerals are used to designate the same or corresponding components of the vehicle lamp 10 or 50 which has been described above, and repetitive descriptions thereof will be omitted.

The vehicle lamp 60 of FIG. 8 to Fig. 10 may also be used as a fog lamp. According to an embodiment, in the vehicle lamp 60, a reflector type lighting unit is mounted inside the lamp chamber 16 defined by the lamp body 14 and the cover 12. The lighting unit includes the LED 18 and a reflector 62. As shown in FIG. 9, a connector 63 for supplying an electric current to the LED 18 from an in-vehicle power source is disposed in the base section 22 of the lamp body 14.

According to an embodiment, the LED 18 is disposed on the LED mount 58 which extends from the base section 22 of the lamp body 14 forward of the lamp such that the lighting surface of the LED 18 faces downward. The reflector 62 reflects light from the LED 18 forward of the lamp.

According to an embodiment, the reflector 62 is supported such that it can vertically tilt around the tilting axis T which extends in the horizontal direction (vehicle width direction). The tilting axis T is parallel to the light-emitting surface of the LED 18 and passes through substantially the center of the light-emitting surface of the LED 18. The self-locking nut 36 is fixed to the left lower end of the reflector 62, and the aiming bolt 38 is screwed into the self-locking nut 36. One end of the aiming bolt 38 extends to the outside of the lamp body 14, and the aiming knob 40 is attached to the aiming bolt 38. According to an embodiment, a support section (not shown) which supports the reflector 62, the self-locking nut 36, the aiming bolt 38 and the aiming knob 40 may configure a tilting mechanism 100 which enables the reflector 62 to tilt with respect to the LED 18.

FIG. 9 shows a condition in which the reflector 62 tilts with respect to the LED 18. In the vehicle lamp 60, when the aiming knob 40 is turned in one direction, the self-locking nut 36 which is screwed with the aiming bolt 38 advances upward following the rotation of the aiming bolt 38. Since the self-locking nut 36 is fixed to the reflector 62, the reflector 62 is pushed upward and tilts upward around the tilting axis T. Following the upward tilting of the reflector 62, the optical axis Ax moves upward (shown as an 'optical axis Ax1' in FIG. 9). Meanwhile, when the aiming knob 40 is turned in the other direction, the self-locking nut 36 retreats backward following the rotation of the aiming bolt 38, and the reflector 62 tilts downward around the tilting axis T. Following the downward tilting of the reflector 62, the optical axis Ax moves downward (shown as an 'optical axis Ax2' in FIG. 9).

According to the vehicle lamp 60 of the third exemplary embodiment, the direction of the optical axis Ax of the vehicle lamp 60 is adjusted by tilting the reflector 62 with respect to the LED 18 using the tilting mechanism 100. According to the configuration in which the reflector 62 tilts as in the third exemplary embodiment, it is possible to make the tilting mechanism 100 more compact than the case in which the entire reflector-type lighting unit is tilted, thereby reducing the size and weight of the vehicle lamp 60.

The present invention has been described in connection with the embodiments thereof. These embodiments are only examples of the invention, and it is apparent to a person having ordinary skill in the art that modifications may be possible with respective to components, processes and combinations described in the embodiments, and such modifications would fall within the scope of the invention.

For example, although the LED is used as the light source in the exemplary embodiments, other types of light sources such as a bulb may also be used.

In accordance with embodiments, a vehicle lamp 10, 50, 60 may include: a light source 18; an optical member 20, 62 that irradiates light from the light source 18 forward of the lamp 10, 50, 60; and a tilting mechanism 100 that enables the optical member 20, 62 to tilt with respect to the light source 18. The optical member may be a projection lens 20 or a reflector 62.

According to this structure, it is possible to adjust the optical axis of the vehicle lamp by tilting the projection lens 20 or the reflector 62 with respect to the light source using the tilting mechanism. By structuring the projection lens 20 or the reflector 62 so as to tilt, it is possible to make the tilting mechanism more compact than the case in which the entire lamp is tilted, thereby reducing the size of the vehicle lamp.

In the vehicle lamp 10, 50, 60, an optical axis Ax of the lamp 10, 50, 60 may be adjusted by tilting the optical member 20, 62 with respect to the light source 18 using the tilting mechanism 100.

In the vehicle lamp 10, 50, 60, the optical member 20, 62 may be supported so as to tilt around a tilting axis T of the tilting mechanism 100. The light source 18 may be disposed on the tilting axis T or in a vicinity of the tilting axis T.

In the vehicle lamp 10, 50, the optical member is the projection lens 20, and the tilting mechanism 100 may include: a support 31, 32 which pivotably supports a holder 34 of the projection lens 20; and a tilting adjustment bolt 38 that engages with the support 31, 32 so as to tilt the projection lens 20 around the tilting axis T.

The vehicle lamp 10, 50, 60 may further include a heat sink 30 for radiating heat generated by the light source 20. The tilting mechanism 100 may be disposed on the heat sink 30.

According to the embodiments of the invention, it is possible to reduce the size of the vehicle lamp.

## Claims

1. A vehicle lamp (10, 50, 60) comprising:
a light source (18);
an optical member (20, 62) that irradiates light from the light source (18) forward of the lamp (10, 50, 60); and
a tilting mechanism (100) that enables the optical member (20, 62) to tilt with respect to the light source (18).

2. The vehicle lamp (10, 50, 60) according to claim 1, wherein the optical member comprises a projection lens (20) or a reflector (62).

3. The vehicle lamp (10, 50, 60) according to claim 1 or 2, wherein an optical axis (Ax) of the lamp (10, 50, 60) is adjusted by tilting the optical member (20, 62) with respect to the light source (18) using the tilting mechanism (100).

4. The vehicle lamp (10, 50, 60) according to any one of claims 1 to 3, wherein the optical member (20, 62) is supported so as to tilt around a tilting axis (T) of the tilting mechanism (100), and
wherein the light source (18) is disposed on the tilting axis (T) or in a vicinity of the tilting axis (T).

5. The vehicle lamp (10, 50) according to any one of claims 1 to 4, wherein the optical member comprises the projection lens (20), and
wherein the tilting mechanism (100) comprises:
a support (31, 32) which pivotably supports a holder (34) of the projection lens (20); and
a tilting adjustment bolt (38) that engages with the support (31, 32) so as to tilt the projection lens (20) around the tilting axis (T).

6. The vehicle lamp (10, 50, 60) according to any one of claims 1 to 5, further comprising a heat sink (30) for radiating heat generated by the light source (20),
wherein the tilting mechanism (100) is disposed on the heat sink (30).
